# EUROPEAN PATENT APPLICATION

(11) **EP 4 152 577 A1**
(43) Date of publication of application: **22.03.2023**
(21) Application number: 21852261.3
(22) Date of filing: 26.07.2021
(51) Int. Cl.: H02K 15/02

(54) **METHOD FOR PRODUCING STATOR FOR ROTARY ELECTRICAL MACHINE**

(30) Priority: 05.08.2020 JP 2020133270
(71) Applicant: AISIN CORPORATION, Kariya-shi, Aichi 448-8650 (JP); Art Metal Mfg. Co., Ltd., Ueda-shi, Nagano 386-0027 (JP)
(72) Inventor: IKEDA, Masaki, Kariya-shi, Aichi 448-8650 (JP); OKAZAWA, Toshihiko, Kariya-shi, Aichi 448-8650 (JP)
(74) Representative: Kramer Barske Schmidtchen Patentanwälte PartG mbB
(86) International application number: PCT/JP2021/027540
(87) International publication number: WO 2022/030282

(57) **Abstract**

A method of manufacturing a stator for a rotary electric machine (10) includes: a step of preparing a stator core (112, 112A) formed from a first metal material that is magnetic, the stator core having a space (80) provided on a radially inner side and in which a rotor is to be disposed; a blocking step of covering at least a part of an end surface (1125, 1126) of the stator core in an axial direction and blocking the space using a blocking member (71, 72); and a casting step of pouring a second metal material that is non-magnetic to a radially outer side of the stator core with at least a part of the end surface of the stator core covered and with the space blocked through the blocking step in a die.

## Description

### TECHNICAL FIELD

The present disclosure relates to a method of manufacturing a stator for a rotary electric machine.

### BACKGROUND ART

There is known a technique of fixing a stator core to a case using bolts, forming a gap between the case and the stator core in the radial direction, and disposing a pipe through which oil for cooling flows in the gap.

### Related Art Documents

### Patent Documents

Patent Document 1: Japanese Unexamined Patent Application Publication No. 2014-158400 (JP 2014-158400 A)

### SUMMARY OF THE INVENTION

### Problem to be Solved by the Invention

In the technique according to the related art discussed above, however, bolts are used to fix the stator core to the case, and thus there arise disadvantages due to the bolts (e.g. occurrence of distortion of the stator core due to fastening of the bolts, an increase in the number of components including the bolts, etc.).

Thus, it is an object of the present disclosure to appropriately integrate a non-magnetic material on the radially outer side of a stator core.

### Means for Solving the Problem

An aspect of the present disclosure provides a method of manufacturing a stator for a rotary electrical machine, including: a step of preparing a stator core formed from a first metal material that is magnetic, the stator core having a space provided on a radially inner side and in which a rotor is to be disposed; a blocking step of covering at least a part of an end surface of the stator core in an axial direction and blocking the space using a blocking member; and a casting step of pouring a second metal material that is non-magnetic to a radially outer side of the stator core with at least a part of the end surface of the stator core covered and with the space blocked through the blocking step in a die.

### Effects of the Invention

With the present disclosure, it is possible to appropriately integrate a non-magnetic material on the radially outer side of a stator core.

### BRIEF DESCRIPTION OF THE DRAWINGS

[FIG. 1] FIG. 1 is a front view schematically illustrating the appearance of a motor according to a first embodiment.
[FIG. 2] FIG. 2 is a side view (a plan view as seen in the axial direction) schematically illustrating a part of the motor.
[FIG. 3] FIG. 3 is a sectional view schematically illustrating a part of the motor taken along a plane that passes through the central axis of the motor.
[FIG. 4] FIG. 4 is a perspective view illustrating a core for a cooling water passage alone.
[FIG. 5] FIG. 5 is a plan view of a stator core alone.
[FIG. 6] FIG. 6 is a sectional view of a stator taken along the radial direction.
[FIG. 7] FIG. 7 is a sectional view of the stator taken along the axial direction.
[FIG. 8] FIG. 8 illustrates a single coil piece as seen from three directions.
[FIG. 9] FIG. 9 is a schematic flowchart illustrating the flow of a method of manufacturing the stator.
[FIG. 10A] FIG. 10A schematically illustrates a state in which a masking die is attached.
[FIG. 10B] FIG. 10B is a schematic sectional view illustrating the state in which the masking die is attached.
[FIG. 10C] FIG. 10C illustrates a method of joining a support case and the stator core.
[FIG. 10D] FIG. 10D is a sectional view schematically illustrating a state in which cores etc. are set in a casting die.
[FIG. 11] FIG. 11 illustrates a comparative example.
[FIG. 12] FIG. 12 is cross-sectional perspective view of a joint portion between a stator core and a support case according to a second embodiment.

### MODES FOR CARRYING OUT THE INVENTION

Embodiments will be described in detail below with reference to the accompanying drawings.

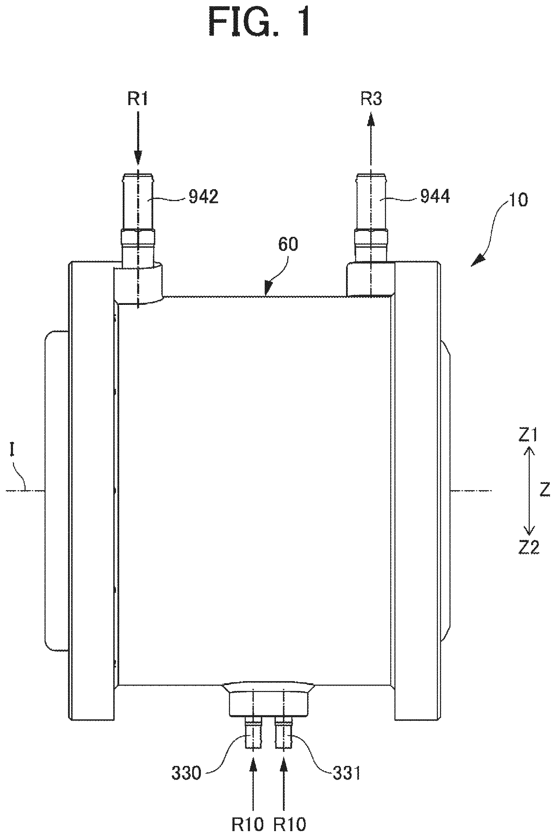

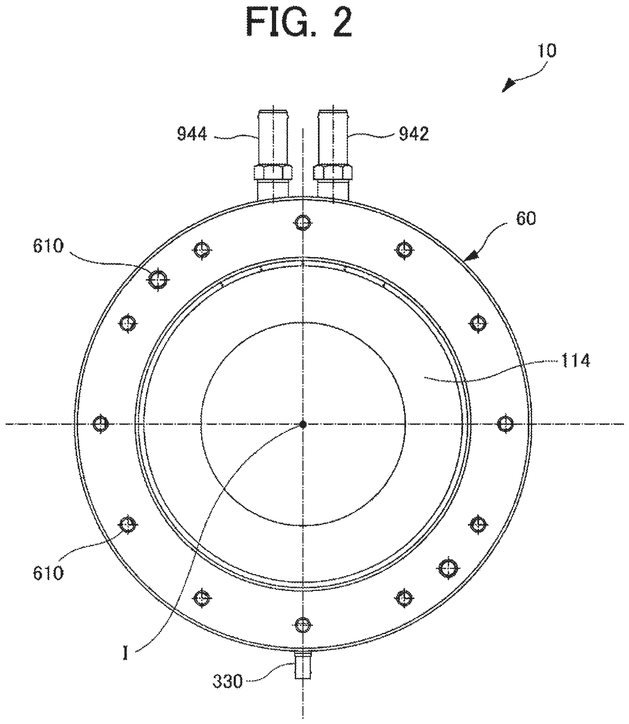

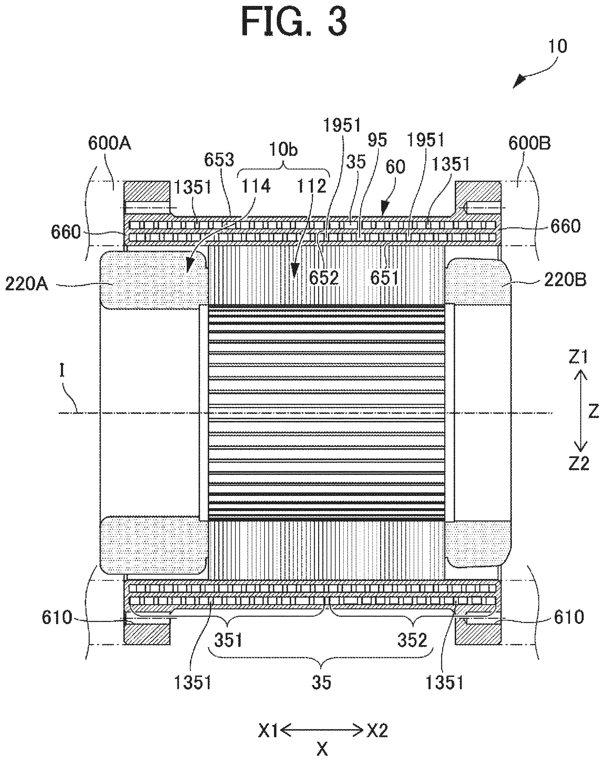

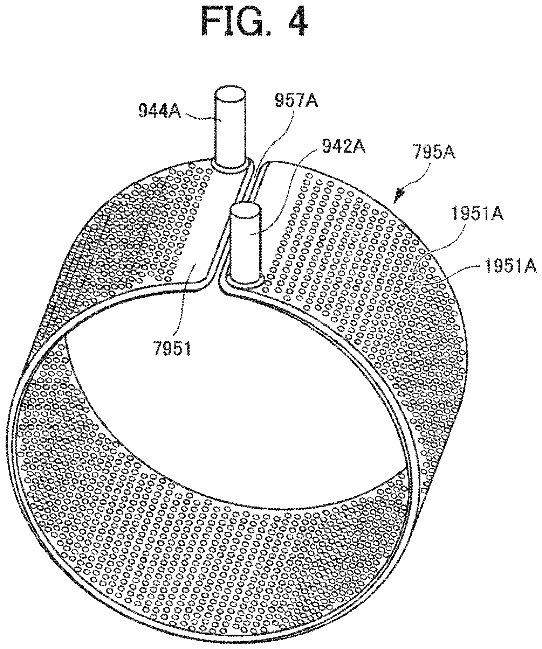

FIG. 1 is a front view schematically illustrating the appearance of a motor 10 according to the present embodiment. FIG. 2 is a side view (a plan view as seen in the axial direction) schematically illustrating a part of the motor 10. FIG. 3 is a sectional view schematically illustrating a part of the motor 10 taken along a plane that passes through a central axis I of the motor 10. FIG. 4 is a perspective view illustrating a core 795A for a cooling water passage 95 alone. In FIGS. 1 to 3, a rotor of the motor 10 is not illustrated, and a stator coil 114 etc. are illustrated significantly schematically.

In the following, the radial direction is based on a central axis I (= the central axis of a stator core 112) of the motor 10 unless otherwise specified. In the following description, the up-down direction represents the up-down direction with the motor 10 mounted such that the central axis I is generally parallel to the horizontal direction. In FIG. 1 etc., the Z direction corresponding to the up-down direction and the X direction corresponding to the axial direction are indicated. In this case, the Z direction is orthogonal to the central axis I, with the Z1 side corresponding to the upper side and with Z2 side corresponding to the lower side.

The motor 10 (an example of a rotary electric machine) includes a rotor (not illustrated) and a stator 10b. The stator 10b includes a stator core 112 and a stator coil 114. The stator coil 114 includes coil ends 220A, 220B at both ends in the axial direction.

The motor 10 also includes a support case 60.

As illustrated in FIGS. 1, 2, etc., the support case 60 is in a cylindrical form, and can function as a case for the motor 10. The support case 60 is formed to open on both sides in the axial direction (formed not to substantially overlap the stator core 112 as viewed in the axial direction), for example. The support case 60 is coupled to different case members 600A, 600B (schematically illustrated by the long dashed short dashed line in FIG. 3) on both sides in the axial direction. The case member 600A or 600B on one end side in the axial direction may rotatably support the rotor (not illustrated), although not illustrated in FIG. 3. In FIGS. 2 and 3, holes 610 for bolt coupling to the different case members 600A, 600B are illustrated in FIGS. 2 and 3. In this manner, the support case 60 may be coupled to the different case members 600A, 600B such that end surfaces of the support case 60 in the axial direction abut, in the axial direction, against respective end surfaces of the different case members 600A, 600B in the axial direction. The holes 610 for bolt coupling may be in the form of through holes that penetrate in the axial direction, or may be in the form of non-through holes.

The support case 60 is formed from a material (an example of a second metal material) containing aluminum as a main component. For example, the support case 60 is preferably formed from an aluminum alloy with a high corrosion resistance, in order to form a cooling water passage 95 through which cooling water passes as discussed later. Any aluminum alloy such as an Al-Si alloy, an Al-Mg alloy, and an Al-Mg-Si alloy, for example, may be used.

The support case 60 is structured to have a hollow portion (cavity) that forms a case oil passage 35 and the cooling water passage 95 (see FIG. 3) as discussed later. The support case 60 that has such a hollow portion is a single-piece member, and may be formed by casting or may be formed using a three-dimensional (3D) print technology.

Specifically, the support case 60 may be formed using a core (insert) (see a core 795A in FIG. 4). While FIG. 4 schematically illustrates the core 795A for the cooling water passage 95, a core for the case oil passage 35 is also prepared. The core 795A illustrated in FIG. 4 includes a cylindrical portion 7951 for forming the cooling water passage 95, and a plurality of holes 1951A (through holes in the radial direction) for forming circular column portions 1951 is formed in the cylindrical portion 7951. The core 795A includes a groove portion 957A in the axial direction. The groove portion 957A in the axial direction forms a partition wall (not illustrated) for blocking, in the axial direction, the continuity of the cooling water passage 95 in the circumferential direction in the top region of the support case 60. The groove portion 957A is formed to penetrate in the radial direction. The core 795A has circular column portions 942A, 944A for forming an inlet water passage 942 and an outlet water passage 944.

The support case 60 can be formed (cast) by setting two such cores in a die (not illustrated) such that the core for the cooling water passage 95 is disposed via a gap in the radial direction on the radially inner side of the core for the case oil passage 35 and pouring a molten metal material (the material of the support case 60; e.g. an aluminum alloy) into the die. In this case, the cores may be collapsible salt cores, for example, and are removed by dissolving salt by injecting water into core portions of a cast product taken out of the die. As a result, it is possible to form the support case 60 in which: a portion of the core for the case oil passage 35 (a portion around holes for forming the circular column portions 1351) forms a space (a space such as the case oil passage 35); a portion of the core for the cooling water passage 95 (a portion around the holes 1951A for forming the circular column portions 1951 as illustrated in FIG. 4) forms a space (a space such as the cooling water passage 95); a gap (an annular gap that extends in the axial direction over generally the entire length of the support case 60 in the axial direction) between the core for the case oil passage 35 and the core for the cooling water passage 95 in the radial direction forms a boundary wall surface portion 652 (see FIG. 3); a gap (an annular gap that extends in the axial direction over generally the entire length of the support case 60 in the axial direction) between the outer peripheral surface of the die and the radially outer surface of the core for the case oil passage 35 forms a radially outer wall surface portion 653 (see FIG. 3); a gap (an annular gap that extends in the axial direction over generally the entire length of the support case 60 in the axial direction) between the inner peripheral surface of the die and the radially inner surface of the core for the cooling water passage 95 forms a radially inner wall surface portion 651 (see FIG. 3); and a gap (an annular gap) between the die and both end surfaces of the cores in the axial direction form both end wall portions 660 (see FIG. 3).

The support case 60 holds the stator core 112 on the radially inner side in contact with the stator core 112 in the radial direction. That is, the support case 60 holds the stator core 112 so as to cover the radially outer surface of the stator core 112 without a gap. In this manner, the support case 60 supports the stator 10b, including the stator core 112, in a non-rotatable manner.

The support case 60 and the stator core 112 are integrated with each other through joining, rather than fastening using bolts. That is, the radially inner surface of the support case 60 is joined to the radially outer surface of the stator core 112. The method of joining the support case 60 and the stator core 112 will be discussed later.

The support case 60 preferably holds the stator core 112 such that the radially inner surface of the support case 60 contacts (makes surface contact with) generally the entirety of the radially outer surface of the stator core 112. In this case, the entire stator core 112 can be efficiently cooled by cooling water that passes through the cooling water passage 95 in the support case 60. In the present embodiment, by way of example, the support case 60 extends over the entire length of the stator core 112 in the X direction, and the inner peripheral surface of the support case 60 contacts generally the entirety of the outer peripheral surface of the stator core 112, as illustrated in FIG. 3. The concept "generally the entirety" of the outer peripheral surface of the stator core 112 may allow a portion such as a welding groove (not illustrated) of the stator core 112 (a portion at which the outer peripheral surface of the stator core 112 and the inner peripheral surface of the support case 60 may be spaced from each other in the radial direction).

The support case 60 includes the case oil passage 35 and the cooling water passage 95 formed therein. In this case, the stator core 112, the cooling water passage 95, and the case oil passage 35 are disposed adjacent to each other in this order from the radially inner side. The term "adjacent" refers to a state in which no portion other than the material of the support case 60 is interposed.

The cooling water passage 95 is connected to the inlet water passage 942 and the outlet water passage 944. Specifically, an upstream end portion of the cooling water passage 95 is connected to the inlet water passage 942, and a downstream end portion of the cooling water passage 95 is connected to the outlet water passage 944. The inlet water passage 942 and the outlet water passage 944 may be formed to project toward the radially outer side of the support case 60 (upper side in the up-down direction) as illustrated in FIG. 1.

The cooling water passage 95 extends in the circumferential direction in the range of extension of the stator core 112 in the axial direction. In the present embodiment, by way of example, the cooling water passage 95 is formed around a large number of circular column portions 1951 (circular column portions that extend in the radial direction) (see FIGS. 3 and 4). More specifically, the radially inner side of the cooling water passage 95 is defined by the radially inner wall surface portion 651, the radially outer side of the cooling water passage 95 is defined by the boundary wall surface portion 652, and both end portions of the cooling water passage 95 in the axial direction are blocked by the both end wall portions 660. The large number of circular column portions 1951 are disposed in the thus formed annular space (an annular space that extends in the axial direction over generally the entire length of the support case 60 in the axial direction) to extend in the radial direction from the radially inner wall surface portion 651 to the boundary wall surface portion 652. The large number of circular column portions 1951 function to allow cooling water to flow without stagnation over the entire radially outer surface of the stator core 112 while constituting a resistance to the flow. The large number of circular column portions 1951 may be disposed as dispersed generally uniformly in the annular space. One end of the cooling water passage 95 in the axial direction is connected to the inlet water passage 942. The other end of the cooling water passage 95 in the axial direction is connected to the outlet water passage 944.

The core 795A illustrated in FIG. 4 includes the groove portion 957A in the axial direction for forming a partition wall (not illustrated) in the axial direction in the top region of the support case 60 as discussed above. The groove portion 957A penetrates the core 795A in the radial direction. The cooling water passage 95 has a partition wall corresponding to the groove portion 957A, and can prevent a flow of cooling water that flows straight from the inlet water passage 942 to the outlet water passage 944. That is, it is necessary for cooling water introduced from the inlet water passage 942 to flow in the axial direction while circulating on the radially outer side of the stator core 112, in order to reach the outlet water passage 944. Thus, the stator core 112 can be effectively cooled compared to when cooling water flows straight from the inlet water passage 942 to the outlet water passage 944.

The case oil passage 35 extends in the circumferential direction in the range of extension of the stator core 112 in the axial direction. In the present embodiment, by way of example, the case oil passage 35 is formed around a large number of circular column portions 1351 (circular column portions that extend in the radial direction) (see FIG. 3). More specifically, the radially inner side of the case oil passage 35 is defined by the boundary wall surface portion 652, the radially outer side of the case oil passage 35 is defined by the radially outer wall surface portion 653, and both end portions of the case oil passage 35 in the axial direction are blocked by the both end wall portions 660. The large number of circular column portions 1351 are disposed in the thus formed annular space (an annular space that extends in the axial direction over generally the entire length of the support case 60 in the axial direction) to extend in the radial direction from the boundary wall surface portion 652 to the radially outer wall surface portion 653. The large number of circular column portions 1351 may be disposed as dispersed generally uniformly in the annular space.

In the present embodiment, by way of example, the case oil passage 35 includes a first oil passage portion 351 on one side in the axial direction and a second oil passage portion 352 on the other side in the axial direction as illustrated in FIG. 3. The first oil passage portion 351 and the second oil passage portion 352 are independent oil passage portions that do not communicate with each other except for the side upstream of inlet oil passages 330, 331. The inlet oil passages 330, 331 may be formed to project toward the radially outer side (lower side in the up-down direction) from the support case 60 as illustrated in FIG. 1.

The first oil passage portion 351 extends in the circumferential direction on one side (X1 side in the present example) of the range of extension of the stator core 112 in the axial direction. The first oil passage portion 351 is formed in a cylindrical shape about the central axis I (in the shape of a cylinder including the circular column portions 1351 in the radial direction as discussed above). One end of the first oil passage portion 351 communicates with the inlet oil passage 330, and the other end of the first oil passage portion 351 opens at an oil drip portion (not illustrated).

The second oil passage portion 352 extends in the circumferential direction on the other side (X2 side in the present example) of the range of extension of the stator core 112 in the axial direction. The second oil passage portion 352 is formed in a cylindrical shape about the central axis I (in the shape of a cylinder including the circular column portions 1351 in the radial direction as discussed above). One end of the second oil passage portion 352 communicates with the inlet oil passage 331, and the other end of the second oil passage portion 352 opens at an oil drip portion (not illustrated).

In the present embodiment, by way of example, the first oil passage portion 351 and the second oil passage portion 352 are formed to be symmetrical and separated from each other near the center of the range of extension of the stator core 112 in the axial direction. Consequently, it is easy to cool the stator core 112 more uniformly using oil that passes through the first oil passage portion 351 and the second oil passage portion 352 while dividing the case oil passage 35 in the axial direction. In a modification, however, the first oil passage portion 351 and the second oil passage portion 352 may be formed to be asymmetric about the center of the range of extension of the stator core 112 in the axial direction, or the first oil passage portion 351 and the second oil passage portion 352 may be formed to communicate (be continuous) with each other as with the cooling water passage 95.

The flow of cooling water and oil in the cooling water passage 95 and the case oil passage 35 discussed above will be briefly described.

Cooling water supplied to the inlet water passage 942 (see the arrow R1 in FIG. 1) enters the cooling water passage 95, flows from the X1 side toward the X2 side while circulating around the central axis I on the radially outer side of the stator core 112 through the cooling water passage 95, and exits from the outlet water passage 944 (see the arrow R3 in FIG. 1).

Oil supplied to the inlet oil passages 330, 331 (see the arrows R10 in FIG. 1) is supplied to the first oil passage portion 351 and the second oil passage portion 352 of the case oil passage 35. Oil supplied to the first oil passage portion 351 flows toward the X1 side while circulating around the central axis I, reaches the top region at an end portion on the X1 side, and is dripped from an oil drip portion (not illustrated) to the coil end 220A on the X1 side (not illustrated). Likewise, oil supplied to the second oil passage portion 352 flows toward the X2 side while circulating around the central axis I, reaches the top region at an end portion on the X2 side, and is dripped from an oil drip portion (not illustrated) to the coil end 220B on the X2 side (not illustrated).

In the example illustrated in FIGS. 1 to 4, the support case 60 in which the cooling water passage 95 is formed contacts the stator core 112, and thus only the radially inner wall surface portion 651 of the support case 60 is present between cooling water and the stator core 112. The temperature of the cooling water is lower than that of the oil, since the cooling water is cooled through heat exchange with outside air (e.g. air that passes during travel of the vehicle) in a radiator (not illustrated) and the oil is cooled through heat exchange with the cooling water in the cooling water passage 95. Thus, the stator core 112 can be efficiently cooled by the cooling water compared to when another medium or member such as oil, for example, is interposed between the cooling water and the stator core 112.

In the example illustrated in FIGS. 1 to 4, as discussed above, the cooling water passage 95 extends over the entire stator core 112 in the axial direction on the radially outer side of the stator core 112, and extends over the entire stator core 112 in the circumferential direction. Thus, the entire stator core 112 can be deprived of heat.

In the example illustrated in FIGS. 1 to 4, the cooling water passage 95 and the case oil passage 35 are formed in the support case 60, and thus a boundary portion between the cooling water passage 95 and the case oil passage 35 can be formed in the support case 60. That is, the case oil passage 35 is formed in the support case 60 in which the cooling water passage 95 is formed, and thus only the boundary wall surface portion 652 of the support case 60 is present between cooling water and oil in the radial direction. Thus, oil can be efficiently cooled by cooling water compared to when another member is interposed between cooling water and oil, for example. Thus, in the example illustrated in FIGS. 1 to 4, an oil cooler is not required even in the motor 10 with a relatively high output.

In the example illustrated in FIGS. 1 to 4, as discussed above, the cooling water passage 95 and the case oil passage 35 are formed inside the support case 60 which is a single-piece member. Thus, it is possible to reduce the number of components compared to when a support case such as the support case 60 is formed by coupling two or more members, and to achieve a simple configuration since a structure for such coupling (e.g. a bolt fastening structure) is not required.

In the example illustrated in FIGS. 1 to 4, oil in the case oil passage 35 may be circulated at all times during operation of the motor 10, or may be circulated only for a part of the period during operation of the motor 10. For example, oil in the case oil passage 35 is mainly used to cool the coil ends 220A, 220B as discussed above, and thus may be circulated only for a period for which the coil ends 220A, 220B generate a relatively large amount of heat.

While the motor 10 of a specific structure is illustrated in FIGS. 1 to 4, the motor 10 may be of any structure as long as the stator core 112 and the support case 60 are joined to each other. Thus, the support case 60 may not have one or both of the cooling water passage 95 and the case oil passage 35. When the support case 60 does not have the cooling water passage 95 or the case oil passage 35, the support case 60 may have a solid structure. While a specific cooling method is disclosed in FIGS. 1 to 4, the motor 10 may be cooled by any method. Thus, the cooling water passage 95 and the case oil passage 35 may be formed such that cooling water and oil are circulated spirally about the central axis I, for example.

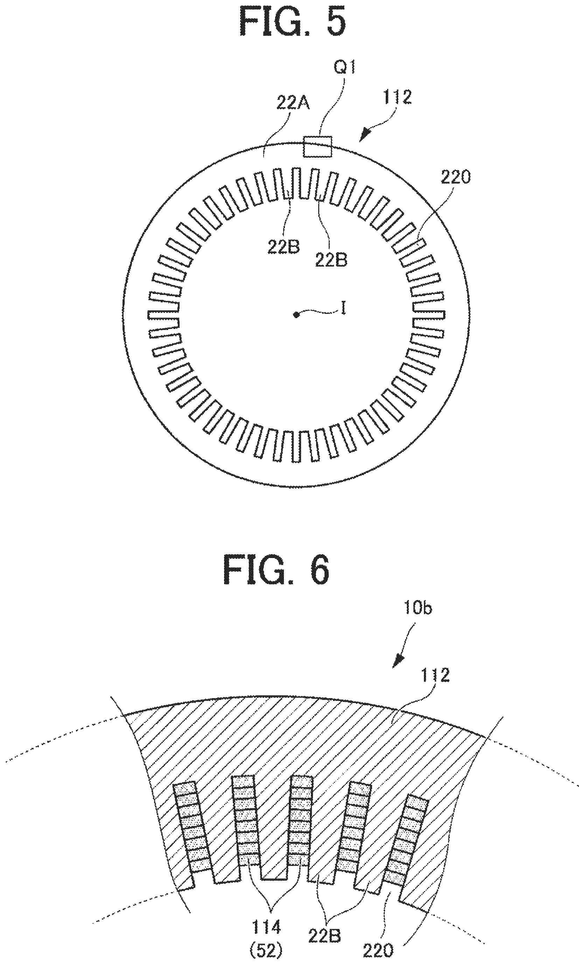

Next, the stator core 112 and the stator coil 114 of the motor 10 will be described with reference to FIGS. 5 to 8.

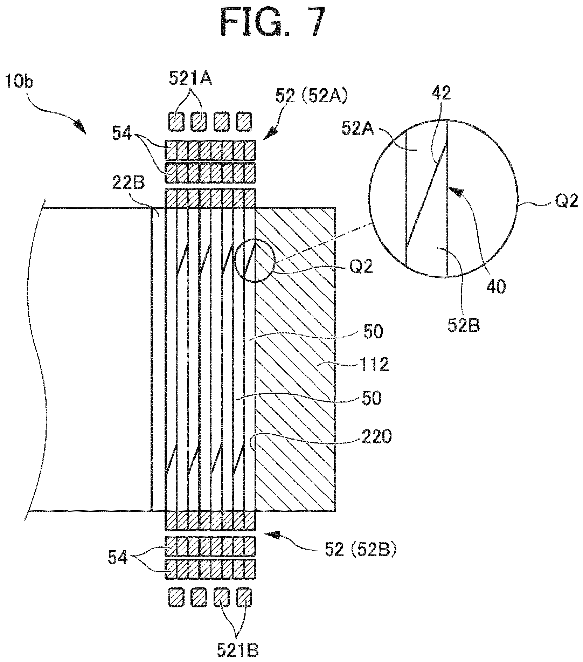

FIG. 5 is a plan view of the stator core 112 alone. FIG. 6 is a sectional view of the stator 10b in which coil pieces 52 have been assembled to the stator core 112, taken along the radial direction. FIG. 7 is a sectional view of the stator 10b in which the coil pieces 52 have been assembled to the stator core 112, taken along the axial direction. FIG. 7 also includes an enlarged view of a Q2 portion in the drawing.

As discussed above, the stator 10b includes the stator core 112 and the stator coil 114.

The stator core 112 is formed from a material (an example of a first metal material) containing iron as a main component. For example, the stator core 112 is formed from laminated magnetic steel sheets in an annular shape, for example. In a modification, however, the stator core 112 may be formed from a compact obtained by compressing and solidifying magnetic powder. The stator core 112 may be formed from split cores that are split in the circumferential direction, or may be formed not to be split in the circumferential direction. A plurality of slots 220 in which the stator coil 114 is wound is formed on the radially inner side of the stator core 112. Specifically, as illustrated in FIG. 5, the stator core 112 includes a back yoke 22A in an annular shape and a plurality of teeth 22B that extends from the back yoke 22A toward the radially inner side, with the slots 220 formed between the teeth 22B in the circumferential direction. While the number of the slots 220 may be any number, there are 48 slots 220 in the present embodiment, by way of example. The width (width in the circumferential direction) of the slots 220 on the radially inner side may be set to be less than the width of the slots 220 on the radially outer side.

The stator coil 114 includes a U-phase coil, a V-phase coil, and a W-phase coil (hereinafter referred to as "phase coils" when the phases U, V, and W are not differentiated from each other). The base end of each phase coil is connected to an input terminal (not illustrated). The terminal end of each phase coil is connected to the terminal ends of the other phase coils to form a neutral point of the motor 10. That is, the stator coil 114 is connected in a star connection. However, the manner of connection of the stator coil 114 may be changed, as appropriate, in accordance with the required motor properties etc., and the stator coil 114 may be connected in a delta connection instead of the star connection, for example.

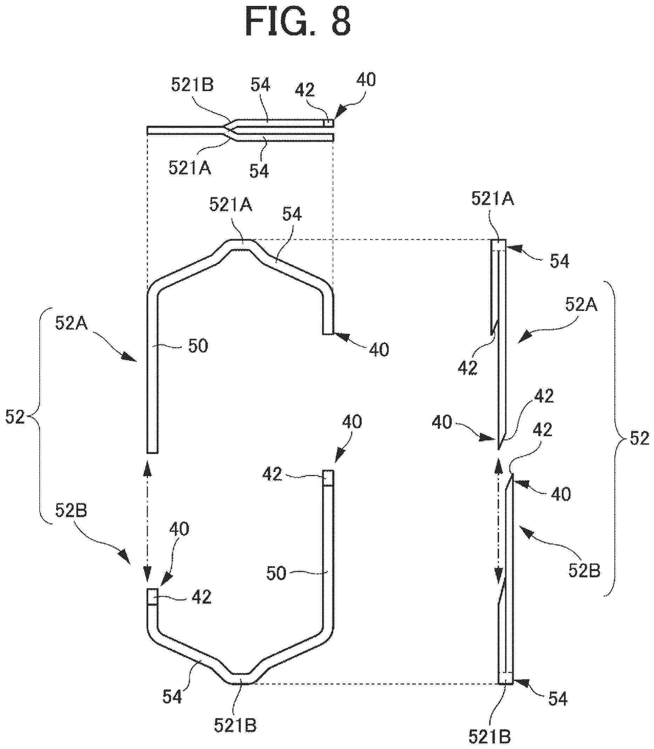

Each phase coil is constituted by coupling a plurality of coil pieces 52. FIG. 8 illustrates a single coil piece 52 as seen from three directions. The coil pieces 52 are formed as segment coils (segment conductors) obtained by splitting the phase coils into easily assembled units (e.g. units to be inserted into two slots 220). The coil pieces 52 are formed by coating linear conductors (rectangular wires) with a generally rectangular cross section with an insulating coating (not illustrated). In the present embodiment, by way of example, the linear conductors are formed from copper. In a modification, however, the linear conductors may be formed from a different conductor material such as iron.

One coil piece 52 is obtained by coupling a first segment conductor 52A on one side in the axial direction and a second segment conductor 52B on the other side in the axial direction. The first segment conductor 52A and the second segment conductor 52B may each be shaped in a generally U-shape that has a pair of linear conductor side portions 50 and a crossover portion 54 that couples the pair of conductor side portions 50. When the coil piece 52 is assembled to the stator core 112, the pair of conductor side portions 50 are inserted into the respective slots 220 (see FIG. 7). In this case, the coil piece 52 can be assembled in the axial direction, for example.

A plurality of conductor side portions 50 of the coil pieces 52 illustrated in FIG. 7 are inserted into each slot 220 as arranged in the radial direction. Thus, a plurality of crossover portions 54 that extend in the circumferential direction are arranged in the radial direction at both ends of the stator core 112 in the axial direction. In the present embodiment, by way of example, eight coil pieces 52 are assembled in each slot 220 (i.e. 8-layer winding structure). The crossover portions 54 generate the coil ends 220A, 220B.

In the present embodiment, as illustrated in FIG. 8, one of the conductor side portions 50 of the first segment conductor 52A on a first side of both sides in the circumferential direction is long and the other on a second side is short, and one of the conductor side portions 50 of the second segment conductor 52B on the second side of both sides in the circumferential direction is long and the other on the first side is short. Consequently, two coupling portions of each of the first segment conductor 52A and the second segment conductor 52B can be offset from each other in the axial direction. In the present embodiment, one of the conductor side portions 50 of the first segment conductor 52A on both sides in the circumferential direction and one of the conductor side portions 50 of the second segment conductor 52B on both sides in the circumferential direction can be coupled to each other, and the other of the conductor side portions 50 of the first segment conductor 52A and the other of the conductor side portions 50 of the second segment conductor 52B are offset from each other in directions away from each other by one layer in the radial direction. Specifically, the first segment conductor 52A and the second segment conductor 52B have respective offset portions 521A, 521B at the top portion of facing surfaces 42, and the offset portions 521A, 521B achieve offset in opposite radial directions.

The coil pieces 52 are mounted in the stator core 112 as wound in the manner of lap winding. In this case, of the first segment conductor 52A and the second segment conductor 52B that constitute one coil piece 52, as illustrated in FIG. 7, the coupling portion 40 of one of the conductor side portions 50 of the first segment conductor 52A and the coupling portion 40 of one of the conductor side portions 50 of the second segment conductor 52B on one of both sides in the circumferential direction are coupled to each other. In this case, the other of the conductor side portions 50 is coupled to another coil piece 52. In this event, the coupling portions 40 have facing surfaces 42 that entirely face each other in the radial direction to make surface contact, and the coupling portions 40 are coupled to each other with the facing surfaces 42 overlapping each other.

The coupling portions 40 of the coil pieces 52 are coupled to each other by welding. The welding method may be arc welding represented by tungsten-inert gas (TIG) welding, or may be laser welding in which a laser beam source is used as a heat source, for example.

In the example illustrated in FIGS. 5 to 8, the stator coil 114 is formed from the coil pieces 52 in the form of segment coils, and thus the space factor of the stator coil 114 in the slots 220 of the stator core 112 can be effectively enhanced. The configuration of the stator coil 114 may be the same as the configuration described in the pamphlet of International Publication No. 2019/059293 (WO 2019/059293 A1), the content of which is incorporated herein by reference. For example, the first segment conductor 52A and the second segment conductor 52B of the coil piece 52 may be the same as a first segment conductor and a second segment conductor of a coil piece described in the document.

While the stator core 112 and the stator coil 114 of a specific structure are illustrated in FIGS. 5 to 8, the stator core 112 and the stator coil 114 may be of any structure as long as the stator coil 114 is formed from the coil pieces 52 in the form of segment coils. The coil pieces in the form of segment coils are not limited to the form in which the coil pieces are coupled to each other in the slots 220 of the stator core 112 as with the coil pieces 52, and may be coupled to each other in a different form such as a form in which the coil pieces are coupled to each other on one end side in the axial direction. The stator coil 114 may also be wound in any manner, and may be wound in a manner other than the lap winding discussed above, such as wave winding.

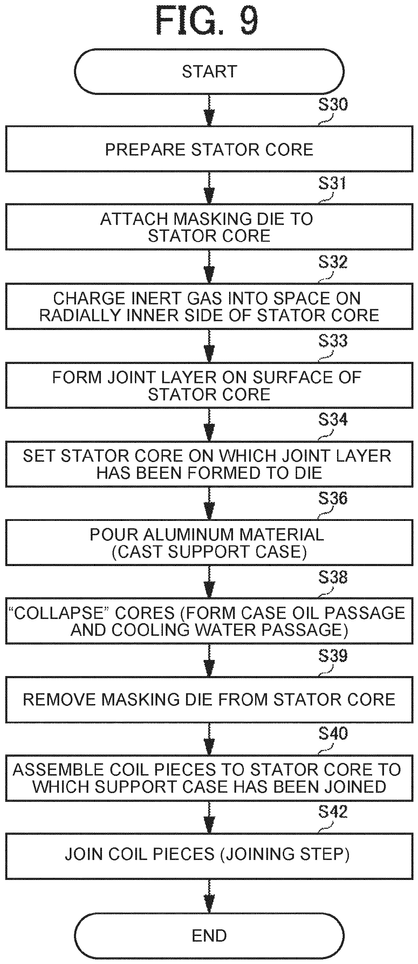

Next, a method of joining the support case 60 and the stator core 112 will be described together with a method of manufacturing the stator 10b with reference to FIG. 9 and the subsequent drawings.

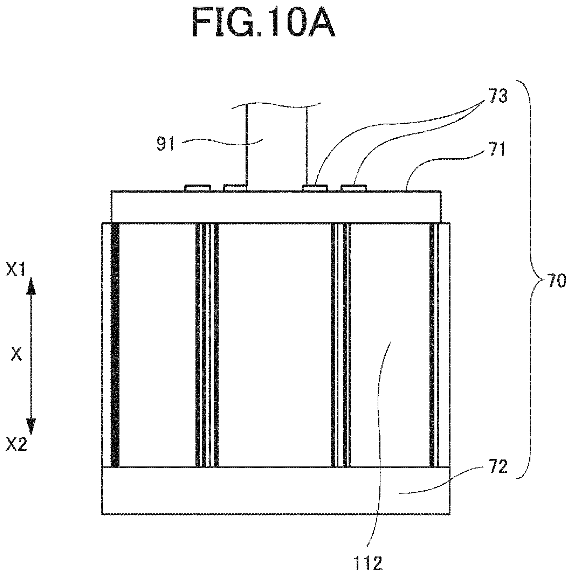

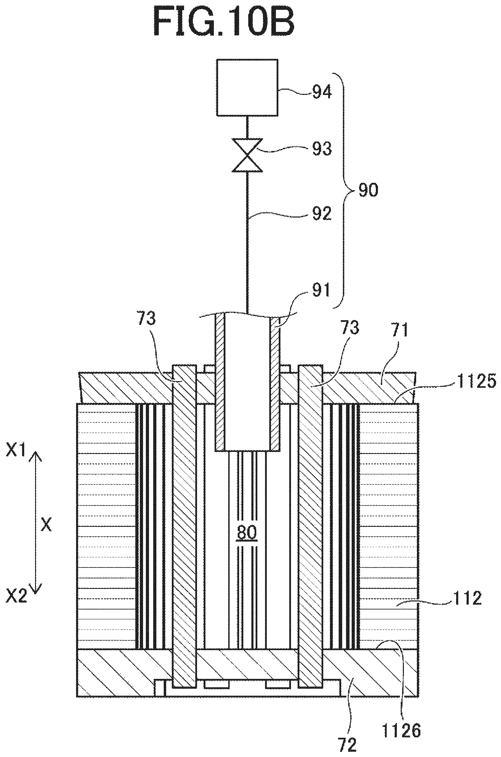

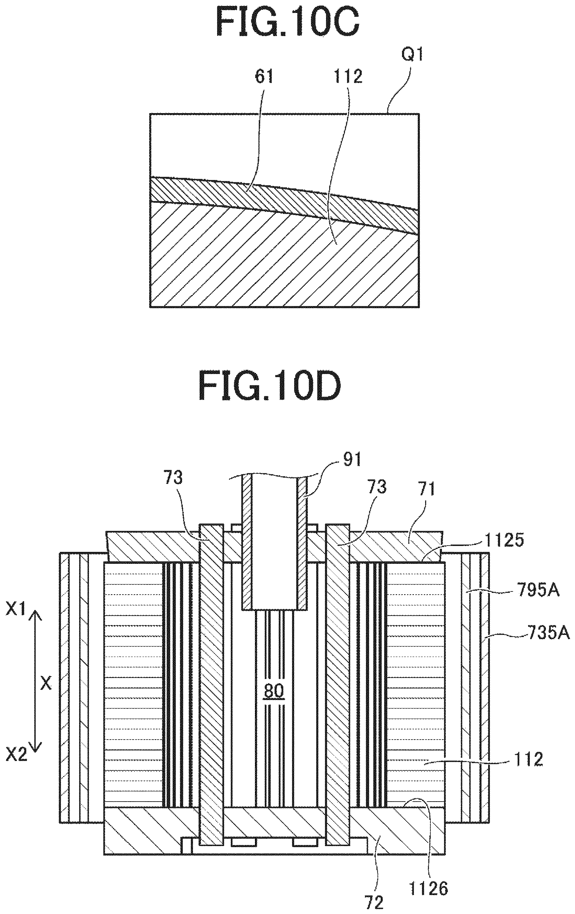

FIG. 9 is a schematic flowchart illustrating the flow of the method of manufacturing the stator 10b. FIGS. 10A to 10D illustrate the manufacturing method indicated in FIG. 9. Specifically, FIGS. 10A and 10B illustrate a masking die 70. FIG. 10A is a front view schematically illustrating an example of the stator core 112 on which the masking die 70 has been set. FIG. 10B is a sectional view of the stator core 112. While the X direction defined in FIG. 3 is indicated in FIGS. 10A and 10B, the X1 side and the X2 side may be reversed. FIG. 10C illustrates the method of joining the support case 60 and the stator core 112, and is an enlarged view of the stator core 112 (an enlarged view of a Q1 portion in FIG. 5) in which a joint layer 61 has been formed. FIG. 10D is a sectional view schematically illustrating a state in which the core 795A etc. have been set.

The method of manufacturing the stator 10b includes first preparing a stator core 112 (step S30). The stator core 112 is formed from laminated magnetic steel sheets in an annular shape, for example. In this case, the steel sheets may not be joined to each other, or may be joined to each other by welding etc.

The method of manufacturing the stator 10b includes then setting a masking die 70 (an example of a blocking member) to the stator core 112 (step S31). The masking die 70 has a function of protecting both end surfaces of the stator core 112 in the axial direction and the radially inner surface of the stator core 112 (a surface on the side on which a rotor core is housed, and on which the slots 220 are formed), as discussed later. This function will be discussed later in association with steps S33 and S36.

In the example illustrated in FIGS. 10A and 10B, for example, the masking die 70 includes an upper masking member 71, a lower masking member 72, and fastening bolts 73.

The upper masking member 71 covers an end surface 1125 of the stator core 112 on the X1 side, and blocks a space 80 (see FIG. 10B) in the stator core 112 in which the rotor core (not illustrated) is to be housed from the X1 side in the axial direction. The lower masking member 72 covers an end surface 1126 of the stator core 112 on the X2 side, and blocks the space 80 (see FIG. 10B) in the stator core 112 in which the rotor core (not illustrated) is to be housed from the X2 side in the axial direction. The fastening bolts 73 generate a force (axial force) in the axial direction between the upper masking member 71 and the lower masking member 72. Specifically, when the fastening bolts 73 are fastened, a force in the axial direction is generated between the upper masking member 71 and the lower masking member 72, which secures abutment (abutment in the axial direction) between the upper masking member 71 and the end surface 1125 of the stator core 112 on the X1 side and secures abutment (abutment in the axial direction) between the lower masking member 72 and the end surface 1126 of the stator core 112 on the X2 side.

A tubular member 91 is airtightly connected to the upper masking member 71. The tubular member 91 may be formed integrally with the upper masking member 71. The tubular member 91 forms an inert gas charging device 90 to be discussed later. As schematically illustrated in FIG. 10B, one end of the tubular member 91 extends into the space 80, and the other end of the tubular member 91 is connected to an inert gas supply path 92. The inert gas supply path 92 may be removably connected to the tubular member 91, or may be integrally connected to the tubular member 91.

The method of manufacturing the stator 10b includes then charging an inert gas into the space 80 of the stator core 112 (step S32). The inert gas may be any gas (i.e. a gas that does not contain oxygen) that does not contain an element that reacts with the steel sheets (electromagnetic steel sheets) that form the stator core 112 at a high temperature, and may be an argon gas, nitrogen, etc., or may be a mixed gas thereof, for example. FIG. 10B schematically illustrates an inert gas charging device 90 that charges the inert gas into the space 80. In the example illustrated in FIG. 10B, the inert gas charging device 90 includes the tubular member 91, the inert gas supply path 92, a valve 93, and an inert gas supply source 94. In this case, the inert gas from the inert gas supply source 94 is charged into the space 80 via the inert gas supply path 92 and the tubular member 91. The valve 93 may be a pressure reducing valve (pressure valve) that can reduce the pressure in the space 80. Consequently, the pressure in the space 80 can be kept appropriately even when the inert gas in the space 80 is expanded because of a temperature rise in step S33 or S36 to be discussed later.

The method of manufacturing the stator 10b includes then forming a joint layer 61 (see FIG. 10C) on a surface (the radially outer surface) of the stator core 112 (step S33). The joint layer 61 is a layer that facilitates the joint of a material containing aluminum as a main component to be introduced in the next step to the surface of the stator core 112. The joint layer 61 is an alloy layer of iron and aluminum. The alloy layer of iron and aluminum can be formed by performing an aluminizing process, for example. The aluminizing process may be implemented by sequentially immersing the stator core 112 in a bath such as an aluminum bath (e.g. a molten aluminum bath). In the aluminizing process, a part of the surface of the stator core 112 is melted to form an alloy layer of iron and aluminum. Since a part of the surface of the stator core 112 is melted to form a joint layer 61, the joint layer 61 and the stator core 112 are securely integrated with each other. The aluminum bath may be commonly used as a casting die to be discussed later.

In the present embodiment, as discussed above, the stator core 112 is immersed in a bath such as an aluminum bath with the masking die 70 attached to the stator core 112. Thus, it is possible to reduce the possibility that molten aluminum etc. adheres to the end surfaces 1125, 1126 of the stator core 112, or that the molten aluminum etc. enters the space 80.

In the present embodiment, as discussed above, the aluminizing process is achieved with the inert gas charged into the space 80.

When the aluminizing process is achieved with the inert gas charged into the space 80, damage to an insulating film on the steel sheets that form the stator core 112 can be reduced compared to when not (i.e. when the aluminizing process is achieved with no inert gas charged into the space 80).

Oxide scales (rust) tend to be generated on the steel sheets that form the stator core 112 when the steel sheets are exposed to an atmosphere containing oxygen at a relatively high temperature (e.g. 600°C or more). When such oxide scales are generated, the insulating film applied to the surface of the steel sheets is broken, and the intended magnetic performance of the stator core 112 may not be obtained. When the aluminizing process is achieved with no inert gas charged into the space 80 (i.e. in an atmosphere containing oxygen), the stator core 112 is exposed to an atmosphere at a high temperature due to the molten aluminum. As a result, the insulating film on the steel sheets of the stator core 112 is broken, and the intended magnetic performance of the stator core 112 may not be obtained.

In the aluminizing process, in particular, the temperature of the stator core 112 tends to be raised to a high temperature compared to normal pouring (the pouring as in step S36 to be discussed later). In the aluminizing process, for example, the stator core 112 is immersed in an aluminum bath at a low melting point (e.g. a molten aluminum bath containing molten aluminum at 680°C or more) for about 20 minutes, and the temperature of the stator core 112 tends to be raised to a significantly high temperature compared to the temperature (e.g. about 600°C) to be reached during normal pouring (the pouring as in step S36 to be discussed later). Oxidation related to such oxide scales tends to progress better as the temperature of the atmosphere containing oxygen is higher, and thus oxide scales tend to be remarkably generated in the aluminizing process compared to normal pouring (the pouring as in step S36 to be discussed later).

In this respect, in the present embodiment, as discussed above, the aluminizing process is achieved with the inert gas charged into the space 80. In this case, generation of oxide scales is suppressed or effectively reduced, even if the stator core 112 is exposed to an atmosphere at a high temperature due to the molten aluminum, since the atmosphere does not substantially contain oxygen. As a result, the insulating film on the steel sheets of the stator core 112 can be protected, and it is possible to effectively reduce the possibility that the intended magnetic performance of the stator core 112 cannot be obtained.

The joint layer 61 is preferably formed so as to cover the entire range in which the stator core 112 is joined to the support case 60. Consequently, it is possible to secure the joint between the stator core 112 and the support case 60 over the entire range of the joint between the stator core 112 and the support case 60.

The method of manufacturing the stator 10b includes then setting the stator core 112 on which the joint layer 61 has been formed to a casting die (not illustrated) (step S34). In this event, the stator core 112 is set to the casting die with the masking die 70 discussed above attached to the stator core 112. In this event, a core for forming the case oil passage 35 and a core for forming the cooling water passage 95 (see the core 795A in FIG. 4) discussed above are set to the casting die. FIG. 10D schematically illustrates a state in which a core 735A for forming the case oil passage 35 and the core 795A for forming the cooling water passage 95 discussed above are set to the casting die (not illustrated). As schematically illustrated in FIG. 10D, the core 795A is set as spaced on the radially outer side from the stator core 112 on the radially inner side, and the core 735A is set as spaced on the radially outer side from the core 795A. The core 735A is set as spaced on the radially inner side from the casting die (not illustrated) on the radially outer side.

The method of manufacturing the stator 10b includes then casting a support case 60 (casting step) (step S36) by pouring a material containing aluminum as a main component (hereinafter simply referred to as an "aluminum material") in a molten state into the casting die to which the stator core 112 (the stator core 112 on which the joint layer 61 has been formed) has been set. While a die casting (aluminum gravity casting) method in which casting is performed using only the weight of the molten aluminum material is adopted in the present embodiment, a different casting method may be used.

As discussed above, the joint layer 61 has been formed on the surface of the stator core 112 set to the casting die. Thus, when a molten aluminum material is introduced into the casting die, the aluminum material is integrated with aluminum contained in the joint layer 61. In this manner, the support case 60 can be securely joined to the surface of the stator core 112 via the joint layer 61.

As discussed above, the core 795A is set as spaced on the radially outer side from the stator core 112 on the radially inner side, and the core 735Ais set as spaced on the radially outer side from the core 795A and set as spaced on the radially inner side from the casting die (not illustrated) on the radially outer side. Thus, the aluminum material is poured such that the aluminum material fills such gaps in the radial direction. As a result, a portion for the support case 60 is completed.

In the present embodiment, as discussed above, the stator core 112 is set to the casting die with the masking die 70 attached to the stator core 112. Thus, it is possible to reduce the possibility that the aluminum material adheres to the end surfaces 1125, 1126 of the stator core 112, or that the aluminum material enters the space 80.

In the present embodiment, the casting step in step S36 is executed with the inert gas charged into the space 80, as in the aluminizing process discussed above. When the casting step in step S36 is executed with the inert gas charged into the space 80, damage to the insulating film on the steel sheets that form the stator core 112 can be reduced compared to when not (i.e. when the casting step in step S36 is executed with no inert gas charged into the space 80).

Specifically, when the casting step in step S36 is achieved with no inert gas charged into the space 80 (i.e. in an atmosphere containing oxygen), the radially inner surface of the stator core 112 is exposed to an atmosphere at a high temperature due to the aluminum material at a high temperature. As a result, the insulating film on the steel sheets of the stator core 112 is broken, and the intended magnetic performance of the stator core 112 may not be obtained.

In this respect, when the casting step in step S36 is executed with the inert gas charged into the space 80, generation of oxide scales is suppressed or effectively reduced, even if the stator core 112 is exposed to an atmosphere at a high temperature, since the atmosphere does not substantially contain oxygen. As a result, the insulating film on the steel sheets of the stator core 112 can be protected, and it is possible to effectively reduce the possibility that the intended magnetic performance of the stator core 112 cannot be obtained.

Step S32 may be executed again prior to the casting step in step S36. In this case, the casting step in step S36 can be executed with the inert gas reliably charged into the space 80. In a different modification, the inert gas may be charged into the space 80 again after the start or during the execution of the casting step in step S36. For example, a pressure sensor may be provided in the tubular member 91 etc., and supply of the inert gas from the inert gas supply source 94 may be controlled such that the pressure in the space 80 (pressure of the inert gas) is kept at a predetermined value or more during the casting step in step S36.

The method of manufacturing the stator 10b includes then "collapsing" the cores 735A, 795A (FIG. 10D) for forming the case oil passage 35 and the cooling water passage 95 discussed above (step S38). Consequently, the case oil passage 35 and the cooling water passage 95 discussed above are formed inside the support case 60.

The method of manufacturing the stator 10b includes then removing the masking die 70 discussed above from the stator core 112 (step S39). Step S39 may be executed before step S38 discussed above.

The method of manufacturing the stator 10b includes then assembling the coil pieces 52 (see FIG. 6) to the stator core 112 to which the support case 60 has been joined as discussed above (step S40). In this case, the coil pieces 52 can be easily assembled into the slots 220 of the stator core 112 in the axial direction (or from the radially inner side).

The method of manufacturing the stator 10b includes then coupling the coil pieces 52 to each other (coupling step) (step S42).

In this manner, with the example illustrated in FIG. 9, the stator 10b in which the stator core 112 and the support case 60 are securely joined to each other can be easily manufactured by forming the joint layer 61 through the aluminizing process. A rotor (not illustrated) is assembled to the radially inner side of the thus manufactured stator 10b to form a motor 10.

In the example illustrated in FIG. 9, the joint layer 61 is formed before the stator core 112 is set to the casting die (not illustrated). However, the joint layer 61 may be formed in the casting die (not illustrated) after the stator core 112 is set to the casting die. Also in this case, the joint layer 61 may be formed with the stator core 112 set into the casting die with the masking die 70 attached to the stator core 112.

In the present embodiment, as discussed above, the aluminizing process and the casting step are executed with the masking die 70 attached to the stator core 112. Thus, it is possible to reduce the possibility that the aluminum material etc. are attached to the end surfaces 1125, 1126 of the stator core 112, or that the aluminum material etc. reach the space 80 on the radially inner side of the stator core 112 to be attached to the radially inner surface of the stator core 112.

In the present embodiment, as discussed above, the aluminizing process and the casting step are executed with the masking die 70 attached to the stator core 112 and with the inert gas charged into the space 80 of the stator core 112. Thus, it is possible to effectively reduce disadvantages (damage to the insulating film on the steel sheets of the stator core 112) due to the stator core 112 being heated to a high temperature in an atmosphere containing oxygen.

In this manner, with the present embodiment, it is possible to appropriately integrate the support case 60, which is made of aluminum that is a non-magnetic material, on the radially outer side of the stator core 112.

In the example illustrated in FIG. 9, the casting step is executed with the cores 735A, 795A set to the casting die. Thus, the cores 735A, 795A are preferably salt cores. This is because the salt cores are more resistant to heat than shell cores (sand) and impose fewer constraints during casting. For example, when the cores 735A, 795A are salt cores, the cores 735A, 795A can be set to the casting die (not illustrated) in a heated state. In this case, the aluminum material poured into the casting die is not significantly deprived of heat by the cores 735A, 795A, and thus a high-quality support case 60 can be manufactured.

In the preferable example illustrated in FIG. 9, both the aluminizing process and the casting step are executed with the masking die 70 attached to the stator core 112. However, only one of the aluminizing process and the casting step may be executed with the masking die 70 attached to the stator core 112. Likewise, in the preferable example illustrated in FIG. 9, both the aluminizing process and the casting step are executed with the inert gas charged into the space 80 of the stator core 112. However, only one of the aluminizing process and the casting step may be executed with the inert gas charged into the space 80 of the stator core 112.

In the preferable example illustrated in FIG. 9, the masking die 70 covers the entirety of the end surfaces 1125, 1126 of the stator core 112. However, the masking die 70 may be configured to cover only a part of the end surfaces 1125, 1126. The function of the lower masking member 72 may be implemented by the casting die.

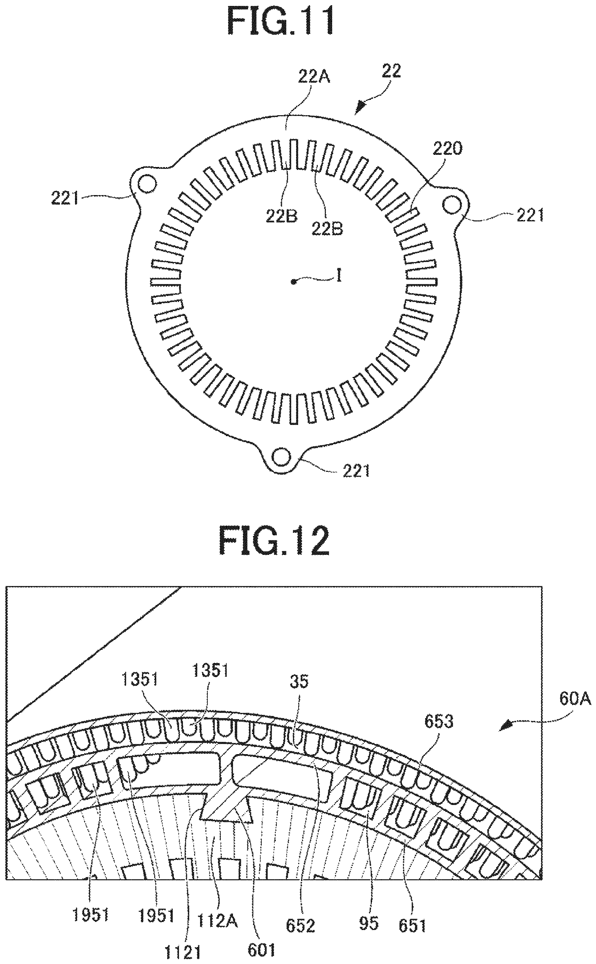

Next, further effects of the present embodiment will be described in comparison with a comparative example in FIG. 11.

FIG. 11 illustrates a comparative example, and is a plan view illustrating a stator core 22 according to the comparative example. The comparative example is different in that the stator core 22 is fastened to a case (not illustrated) using bolts from the present embodiment in which the stator core 112 is joined to the support case 60. In such a comparative example, the stator core 22 includes bolt fastening portions 221 for fastening the stator core 22 to the case (not illustrated) using bolts.

In the present embodiment, as discussed above, the stator core 112 and the support case 60 are joined to each other. Thus, it is possible to reduce the thermal resistance between the stator core 112 and the support case 60 compared to the comparative example (see FIG. 11) in which the stator core is fastened to the case using bolts. That is, in such a comparative example, an air layer due to irregularities on the outer peripheral surface of the stator core tends to be formed between the stator core and the case, and such an air layer tends to increase thermal resistance. In the present embodiment, in contrast, the stator core 112 and the support case 60 are joined to each other as discussed above, and thus irregularities on the outer peripheral surface of the stator core 112 (irregularities in the radial direction along the axial direction) are filled with the material of the support case 60. That is, the joint surface of the support case 60 that serves to receive heat from the stator core 112 does not include an air layer. Thus, with the present embodiment, it is possible to effectively reduce the thermal resistance between the stator core 112 and the support case 60. As a result, with the present embodiment, heat transfer from the stator core 112 to the support case 60 can be promoted to efficiently cool the stator core 112 via the support case 60.

In the present embodiment, as discussed above, the stator core 112 and the support case 60 are joined to each other. Thus, it is possible to reduce the number of components for the use of no bolts, and to suppress occurrence of distortion of the stator core due to fastening of bolts, compared to the comparative example (see FIG. 11) in which the stator core is fastened to the case using bolts.

In the present embodiment, as discussed above, it is not necessary to provide the bolt fastening portions 221 according to the comparative example (see FIG. 11) on the radially outer side of the stator core 112. Consequently, it is possible to reduce irregularities on the radially outer surface of the stator core 112. Thus, the radially outer side of the stator core 112 can be easily cooled by cooling water in the cooling water passage 95 of the support case 60 uniformly along the circumferential direction. That is, in the comparative example, the stator core 22 is thicker in the radial direction in circumferential ranges in which the bolt fastening portions 221 are provided, among the entire circumference of the radially outer surface of the stator core 22, and accordingly the cooling performance to cool a portion on the radially inner side of the stator core 22 tends to be reduced in such circumferential ranges, compared to the other circumferential ranges. In the present embodiment, in contrast, the stator core 112 does not have significant irregularities on the radially outer surface as illustrated in FIG. 5, and thus cooling performance that is uniform over the entire circumference in the circumferential direction can be achieved. In a modification, however, irregularities (e.g. groove portions) for enhancing the strength of joint to the support case 60 may be formed on the radially outer surface of the stator core 112 (see FIG. 12). Also in this case, it is not necessary that the irregularities should include relatively large projections such as the bolt fastening portions 221. Thus, it is possible to enhance the strength of joint to the support case 60 without significantly impairing the uniformity of cooling performance in the circumferential direction.

In the present embodiment, as discussed above, the stator coil 114 is formed using the coil pieces 52 in the form of segment coils. Thus, the coil pieces 52 can be coupled to each other by easily assembling the coil pieces 52 to the stator core 112 to which the support case 60 has been joined as discussed above.

In the present embodiment, as discussed above, both the cooling water passage 95 and the case oil passage 35 are provided inside the support case 60. Thus, the size of the motor 10 in the radial direction can be efficiently reduced compared to a comparative example (not illustrated) in which a radial gap is formed between a case and a stator core to pass a pipe for cooling through the gap, for example.

Next, another embodiment will be described with reference to FIG. 12. In the following, the embodiment discussed above will also be referred to as a "first embodiment" for differentiation.

FIG. 12 illustrates a joint portion between a support case 60A and a stator core 112A according to a different embodiment (second embodiment), and is a perspective view of a part (top region) of the joint portion between the support case 60A and the stator core 112A in the state of being cut along a plane that is perpendicular to the central axis I.

The support case 60A according to the second embodiment is different from the support case 60 according to the first embodiment discussed above in having a wedge-shaped protrusion 601 provided on the radially inner surface (a surface to be joined to the stator core 112A) to project radially inward in a wedge shape.

The stator core 112A according to the second embodiment is different from the stator core 112 according to the first embodiment discussed above in having a wedge-shaped recess 1121 provided in the radially outer surface (a surface to be joined to the support case 60A) to be recessed radially inward in a wedge shape. When the stator core 112A is formed from laminated steel sheets, the wedge-shaped recess 1121 can be easily formed during pressing of the steel sheets.

As illustrated in FIG. 12, the wedge-shaped protrusion 601 of the support case 60A is formed in the wedge-shaped recess 1121 of the stator core 112A. Consequently, it is possible to efficiently enhance the strength of joint between the stator core 112A and the support case 60A.

Also in the second embodiment, the support case can be manufactured based on the manufacturing method indicated in FIG. 9, as with the support case 60 according to the first embodiment discussed above. In this case, the support case 60A can be formed by pouring an aluminum material in a molten state to the radially outer side of the stator core 112A set in the casting die. In this event, the wedge-shaped protrusion 601 is formed from the aluminum material that flows into the wedge-shaped recess 1121.

In the second embodiment, the strength of joint between the stator core 112A and the support case 60A is enhanced with the wedge-shaped protrusion 601 formed in the wedge-shaped recess 1121. Thus, the aluminizing process discussed above may not be required, or the number of locations to apply the aluminizing process may be reduced. Alternatively, the joint strength may be further enhanced by the wedge-shaped recess 1121 and the wedge-shaped protrusion 601, in addition to performing the aluminizing process.

Also with the second embodiment, the same effects as those of the first embodiment discussed above can be obtained. With the second embodiment, in particular, the strength of joint between the stator core 112A and the support case 60A can be efficiently enhanced by the wedge-shaped recess 1121 and the wedge-shaped protrusion 601.

In the second embodiment, the wedge-shaped recess 1121 and the wedge-shaped protrusion 601 may be formed over the entire length in the axial direction, or may be formed for a part of the length in the axial direction. In the second embodiment, the wedge-shaped recess 1121 and the wedge-shaped protrusion 601 may be formed at a plurality of locations along the circumferential direction.

While the wedge-shaped recess 1121 and the wedge-shaped protrusion 601 are used in the second embodiment discussed above, a recess and a projection in a different form may be used. For example, the wedge-shaped protrusion 601 may be replaced with a protrusion with a width (dimension in the circumferential direction) that becomes smaller toward the radially inner side, or a protrusion with a constant width in the circumferential direction. However, the wedge-shaped protrusion 601 with a width (dimension in the circumferential direction) that becomes larger toward the radially inner side is advantageous in being able to efficiently enhance the joint strength.

While the wedge-shaped recess 1121 is formed in the stator core 112Aand the wedge-shaped protrusion 601 is formed on the support case 60A in the second embodiment discussed above, their relationship may be reversed. That is, a wedge-shaped recess that is recessed radially outward may be formed in the support case, and a wedge-shaped protrusion that projects radially outward may be formed on the stator core.

While embodiments have been described in detail above, the present invention is not limited to specific embodiments, and various modifications and changes can be made within the scope of the claims. It is also possible to combine all or some of the constituent elements according to the embodiments discussed earlier.

### Description of the Reference Numerals

10: motor (rotary electric machine), 10b: stator, 61: joint layer, 71: upper masking member (blocking member), 72: lower masking member (blocking member), 80: space, 112, 112A: stator core, 1125, 1126: end surface

## Claims

1. A method of manufacturing a stator for a rotary electric machine, the manufacturing method comprising:
a step of preparing a stator core formed from a first metal material that is magnetic, the stator core having a space provided on a radially inner side and in which a rotor is to be disposed;
a blocking step of covering at least a part of an end surface of the stator core in an axial direction and blocking the space using a blocking member; and
a casting step of pouring a second metal material that is non-magnetic to a radially outer side of the stator core with at least a part of the end surface of the stator core covered and with the space blocked through the blocking step in a die.

2. The method of manufacturing a stator for a rotary electric machine according to claim 1, further comprising
a filling step of filling the space with an inert gas, wherein
the casting step is executed with the space filled with the inert gas through the filling step.

3. The method of manufacturing a stator for a rotary electric machine according to claim 1 or 2, further comprising
a joint layer forming step of forming a joint layer on a radially outer surface of the stator core before the casting step, wherein
the second metal material is poured into the die so as to cover the joint layer on the radially outer surface of the stator core in the casting step.

4. The method of manufacturing a stator for a rotary electric machine according to claim 3, wherein:
the first metal material is a material containing iron as a main component, and the second metal material is a material containing aluminum as a main component; and
the joint layer includes an alloy layer of iron and aluminum.

5. The method of manufacturing a stator for a rotary electric machine according to claim 4, wherein:
the joint layer forming step includes forming the alloy layer through an aluminizing process in which the stator core is immersed in an aluminum bath; and
the aluminizing process is executed with at least a part of the end surface of the stator core covered and with the space blocked through the blocking step, and with the space filled with the inert gas through the filling step.
